# EUROPÄISCHE PATENTSCHRIFT

(11) **EP 0 453 647 B1**
(45) Veröffentlichungstag und Bekanntmachung des Hinweises auf die Patenterteilung: **23.02.1994**
(21) Anmeldenummer: 90124009.3
(22) Anmeldetag: 13.12.1990
(51) Int. Cl.: B29C 47/90

(54) **Verfahren zur Herstellung von Profilen**
Method of manufacturing profiled elements
Procédé de fabrication de profilés

(30) Priorität: 27.04.1990 DE 4016626
(43) Veröffentlichungstag der Anmeldung: 30.10.1991
(73) Patentinhaber: REHAU AG + Co, 95111 Rehau (DE)
(72) Erfinder: Hopperdietzel, Siegfried, Dr., W-8672 Selb (DE)

(56) Entgegenhaltungen:
- EP-A- 0 203 209
- EP-A- 0 210 297
- EP-A- 0 301 189
- WO-A-91/00798
- DE-A- 2 613 782
- PATENT ABSTRACTS OF JAPAN, vol. 7, no. 92 (M-208)(1237)16. April 1983 & JP-A-58 016 830 ( HITACHI KASEI KOGYO K.K. ) 31. Januar 1983
- F. HENSEN ET AL 'HANDBUCH DER KUNSTSTOFF-EXTRUSIONSTECHNIK, I, GRUNLAGEN' 1989, HANSER, MÜNCHEN

## Beschreibung

Die Erfindung betrifft ein Verfahren zur kontinuierlichen Herstellung von Profilen aus glasklarem Polyvinylchlorid, wobei die Ausgangsmaterialien der Rezeptur gemischt, durch Wärmezuführung und Friktion in einem Extruder zu einer homogenen Schmelze aufgeschlossen und anschließend der Schmelzestrom unmittelbar oder mittelbar über eine Granulatzwischenstufe in Form gebracht wird.
Ein solches Verfahren ist allgemein bekannt.

Die kontinuierliche Herstellung von Profilen aus polymeren Werkstoffen, Zu denen auch das Polyvinylchlorid zählt, ist hinreichend bekannt. Neben den speziellen Rezepturbestandteilen, die bei diesem Extrusionsvorgang aufgeschlossen und homogenisiert werden, spielen bei diesem Vorgang die im Verarbeitungssystem herrschenden Drücke und Temperaturen eine entscheidende Rolle. So dürfen rohstoff- und rezepturabhängige Temperaturen nicht überschritten werden, um thermische Schädigungen des Schmelzestroms zu vermeiden. Das gleiche gilt für die während der Verarbeitung herrschenden Druckverhältnisse im Verarbeitungssystem, bei deren Nichteinhaltung Oberflächenschädigungen des erzeugten Profils eintreten. Man spricht hier von einem charakteristischen "Schmelzebruch". Es ist dies eine Eigenschaft von Polymerschmelzen, daß mit dem Erreichen eines erhöhten Extrusionsdruckes eine bei normalem Druck glatte Extrudatoberfläche bei zunehmendem Druck in eine zerklüftete Oberfläche übergeht. Dieses Phänomen ist so zu erklären, daß bei zunehmendem Druck durch Querschnittsänderungen im Extrusionswerkzeug oder durch intermittierende Wandhaftungseigenschaften im Schmelzestrom elastische Schwingungen auftreten, die in den nachfolgenden Teilen des Extrusionswerkzeuges nicht mehr gedämpft werden können.

Hier setzt die Erfindung ein, die es sich zur Aufgabe gestellt hat, das Phänomen des Schmelzebruchs in einem Bereich zu stabilisieren, daß anstelle einer zerklüfteten Oberfläche eine gewünschte Oberflächenrauhigkeit im Mikrobereich eintritt. Erfindungsgemäß wird dazu vorgeschlagen, daß der Schmelzestrom beim Eintritt in den Formgebungsbereich einem erhöhten Massedruck ausgesetzt wird, daß dabei im Bereich der Strömungsoberfläche in bekannter Weise Schmelzebruch erzeugt wird, und daß daran anschließend der Schmelzebruch im Durchlaufen einer kurzen parallelen Bügelzone am Ende des Formgebungsbereiches unvollständig beseitigt wird.

Hierbei hat es sich als vorteilhaft erwiesen, daß die Durchlaufzeit des Schmelzestroms durch die Bügelzone maximal 0,07 Sekunden beträgt. Ferner soll der erhöhte Massedruck zwischen 450 und 550 bar liegen. Wesentlich ist auch, daß die Temperatur des Schmelzestroms im Formgebungsbereich maximal 200° C beträgt. Auch der Formgebungsbereich selbst, also das formgebende Werkzeug, soll die Temperatur des Schmelzestroms, also maximal 200° C, nicht übersteigen.

Mit diesen Verarbeitungsparametern läßt sich ein Profil mit einer Oberfläche erzielen, die eine unorientierte Rauhigkeit aufweist, welche auch als "Mikrorauhigkeit" bezeichnet werden kann. Druck- und Temperaturführung des Schmelzestroms sind erfindungsgemäß so ausgelegt, daß der durch den erhöhten Massedruck erzeugte Schmelzebruch in der Oberfläche des Schmelzestroms durch gezielte Führung in der Bügelzone des Formgebungsbereiches so weit eingeebnet wird, daß die zerklüftete bis sägezahnähnliche Oberfläche in eine unorientierte Mikrorauhigkeit zurückgeführt wird. Auf diese Weise können im Herstellungsprozess solcher Profile Oberflächen erzeugt werden, die Vorteile beim späteren Einsatz der Profile bringen können. Solche Vorteile sind beispielsweise bei scannerbaren Informationsträgern zu erzielen, bei denen durch die erfindungsgemäß erzeugte Microrauhigkeit schädliche zusätzliche Hell-Dunkel-Übergänge vermieden werden.

Die nach dem Stand der Technik bekannten scannerbaren Informationsträger - z.B. EP-A 0 203 209 - sind zum Einsatz an Regalen in Warenlagern, Hochregallagern und dergleichen geeignet. Die in den Informationsträgern befindlichen Etiketten und dergleichen können vom Bedienungspersonal genauso wie von den Kunden im Vorbeigehen gelesen werden. Bei neueren Regalaufbauten wird allerdings das Lesen mit dem Scannerstift bevorzugt. Derartige Scannervorrichtungen arbeiten nach dem Reflexionsverfahren, auch Auflichtverfahren genannt. Als Lichtquelle werden hier Leuchtdioden verwendet, welche vorwiegend im Infrarotbereich arbeiten.

Es gibt jedoch auch Scannersysteme, die stark strahlende Rotlichtdioden verwenden.

Als Lichtempfänger wird bei den Scannern eine Fotodiode verwendet. Weil die Sendediode und die Fotodiode auf sehr kleinem Raum nebeneinander untergebracht werden müssen, gibt es hier integrierte Systeme, welche die Sendediode, die Fotodiode, die Filterscheibe und den Verstärker für das Fotodiodensignal beinhalten. Ein häufig verwendetes System ist der Typ HEDS-1000 der Firma Hewlett-Packard. Dieser Sensor arbeitet mit Infrarotlicht von 700 mm Wellenlänge und kann geregelt oder ungeregelt betrieben werden. Beim Überstreichen einer auf dem Etikett befindlichen Linieninformation mit dem Scannerstift wird das Infrarotlicht von der Empfängerdiode empfangen, wobei die Breite und der Abstand der Linien als "Lichtgeflacker" in ein elektrisches Signal umgewandelt werden, welches im Scannersystem elektronisch aufbereitet und weiterverarbeitet wird.

Aufgrund der hohen Lichtintensität der Leuchtdioden sowie der meistens geregelt betriebenen Scanner-Empfangsdioden erfolgt keine Funktionsbeeinträchtigung, wenn z.B. der Etikettenuntergrund, auf dem das Linienraster gedruckt ist, im Farbton innerhalb bestimmter Grenzen schwankt oder der Druck des Linienrasters unterschiedlich schwarz ausgefallen ist.

Ausgesprochen anfällig reagieren die empfindlichen Scannersysteme auf beispielsweise reflektiertes Falschlicht, welches beispielsweise aus dem durchsichtigen Abdeckstreifen stammen kann. Durch solches Falschlicht bekommt der Scannerstift Fehlinformationen, mit denen die Auswertelektronik nicht zurechtkommt.

Die erfindungsgemäßen Informationsträger werden im Extrusionsverfahren einstückig hergestellt, wobei im vorliegenden Fall in der Regel das Verfahren der Koextrusion gewählt wird. Mit diesem Verfahren wird die transparente Vorderwand einstückig zusammen mit der nichttransparenten Hinterwand derart extrudiert, daß die Vorderwand einseitig an einer Längskante mit der Hinterwand verbunden ist, während die andere Längskante ohne Verbindung mit der Hinterwand bleibt.

Über die letztere Längskante kann dann die Vorderwand von der Hinterwand abgebogen werden, wobei die Verbindungsbereiche zwischen Vorderwand und Hinterwand auch als Filmscharnier ausgebildet werden können. In den dadurch erzeugten Spalt zwischen Vorderwand und Hinterwand wird dann von oben das scannerlesbare Etikett eingeschoben. Danach wird die Vorderwand aufgrund der beim Abbiegen erzeugten Spannungen wieder auf die Rückwand zurückgeführt, wobei das in die Aufnahmetasche eingelegte Etikett eingeschlossen und wegen der Transparenz der Vorderwand sowohl für das menschliche Auge als auch für den Scannerstift sichtbar ist.

Zur Herstellung solcher Profile werden insbesondere hinsichtlich ihrer Gleitmittel spezifisch eingestellte Rezepturen verwendet, die in Verbindung mit der erfindungsgemäß definierten Verweilzeit der Schmelze im parallelen Austragsteil des Düsenmundstückes zu der gewünschten unorientierten Rauhigkeit führen. Ein Beispiel für eine solche Rezeptur ist wie folgt aufgebaut:
- 100: Gewichtsteile Masse-Polyvinylchlorid mit einem K-Wert 57
- 2: Gewichtsteile Zinnstabilisator
- 1,5: Gewichtsteile Polymethylmetacrylat - flow modifier
- 1,2: Gewichtsteile Gleitmittelgemisch aus Fettalkoholen, Wachsestern und oxidiertem Polyethylen

Die Rezeptur wird in einem Extruder durch Temperatureinwirkung und Schneckenfriktion aufgeschlossen, wobei die Verweilzeit der Schmelze im parallelen Austragsteil des Düsenmundstückes erfindungsgemäß nicht mehr als 0,07 Sekunden beträgt. Mit einer solchen Rezeptur und der erfindungsgemäßen Verweilzeit im parallelen Austragsteil des Düsenmundstückes läßt sich eine Profiloberfläche erzielen, bei der die Rauhtiefe der Oberfläche in Längs- und Querrichtung annähernd gleich ist. Die Differenz dieser Rauhtiefe ist in Längs- und Querrichtung kleiner als 3,0 µm.
Letzteres ist für die Erfindung wichtig, da eine größere Rauhtiefendifferenz - wie Untersuchungen ergeben haben - Zusätzliche Hell-Dunkel-Übergänge und damit bei der Verwendung für scannerbare Informationsträger schädliche Reflektionen hervorruft.

Solche Rauhtiefendifferenzen treten zwangsläufig beim Extrusionsvorgang auf. Hier ist es eine bekannte Erscheinung, daß auf der Oberfläche der extrudierten Profile längsverlaufende Ziehstreifen entstehen.

Derartige Ziehstreifen können in der Höhe so gering sein, daß sie vom menschlichen Auge kaum wahrgenommen werden. Weil die Leuchtdioden in Scannersystemen jedoch eine extrem hohe Lichtintensität haben, werden die Ziehriefen auf der Profiloberfläche, hier auf der Oberfläche der transparenten Vorderwand, vom IR-Licht der Leuchtdiode erfaßt, und die Berg- und Talformationen, die im vergrößerten Maßstab die Ziehriefen auf der Profiloberfläche bilden, werden als zusätzliche Hell-Dunkel-Übergänge Über Reflexionen eingeblendet. Diese Einblendungen treten als reflektiertes Falschlicht auf und geben an den Scannerstift Fehlinformationen weiter, welche die Auswertelektronik verwirren. Von einem derart mit einem Scannerstift gelesenen Etikett werden daher falsche Informationen in die Auswertelektronik eingegeben. Diese Informationen sind wertlos.

Die Lehre der Erfindung geht nun dahin, die beim Extrusionsvorgang zwangsläufig entstehenden Längsriefen derart zu egalisieren, daß solche Falschinformationen an die Auswertelektronik vermieden werden. Das aufgetretene Problem wird durch die Merkmale des Anspruchs 1 gelöst. Die einseitig orientierten Längsriefen, die bei der Extrusion an der Profiloberfläche entstehen, werden durch annähernd gleich tiefe, nicht orientierte Rauhigkeiten egalisiert, so daß eine optisch gleich rauhe Oberfläche entsteht.

Diese Problemlösung ergibt sich aus der Erkenntnis, daß eine optisch völlig glatte Profiloberfläche im Extrusionsverfahren nicht zu erzielen ist. Die zwangsläufig auftretenden einseitig orientierten Längsriefen, werden durch die Erfindung aufgelöst in an der Oberfläche der transparenten Vorderwand annähernd gleichmäßige, unorientierte Rauhigkeit.

Durch diese annähernd gleichmäßige, unorientierte Rauhigkeit werden störende, abrupte Hell/Dunkel-Lichtstreuungen, die bei den einseitig orientierten Ziehriefen als Ursache für die Falschmeldungen zur Auswerteelektronik erkannt worden sind, verringert bzw. ganz ausgeschlossen. Mit der erfindungsgemäß ausgestalteten Profiloberfläche wird damit kein Falschlicht mehr reflektiert, welches dem Scannerstift Fehlinformationen übermitteln könnte. Die schädlichen Hell-Dunkel-Übergänge der einseitig orientierten Extrusions-Ziehriefen, die für die ungewünschten zusätzlichen Reflexionen verantwortlich sind, werden dadurch ausgeschlossen.

Durch die gleichmäßige, unorientierte Rauhigkeit der transparenten Vorderwand gemäß der Erfindung wirkt die Oberfläche rauh und milchig, der Kern der Vorderwand bleibt jedoch glasklar. Auf diese Weise können durch den Kern der Vorderwand keine schädlichen Reflexionen von Licht erfolgen. Die erfindungsgemäß unorientierte Rauhigkeit der Oberfläche sorgt dann dafür, daß auch von der Oberfläche keine schädlichen Reflexionen mehr ausgehen können. Der Lichtstrahl des Scannerstiftes kann daher unbeeinflußt von schädlichen Nebenreflexionen bis zum Strichcode des eingesetzten Etiketts durchdringen und die Informationen des Linienrasters - ebenfalls unbeeinflußt von schädlichen Reflexionen - über die Sendediode an die Fotodiode zurückgeben. Die Information aus dem Linienraster des Etiketts kommt dabei ohne negative Nebenwirkungen in die Auswertelektronik und kann dort entsprechend weiterbearbeitet werden.

Für die Erfindung besonders wichtig ist die Länge der Bügelzone am Ausgang des Formgebungsbereiches, da die Oberfläche des erzeugten Profils mit ihrer Mikrorauhigkeit in dieser Parallelführung direkt beeinflußt werden kann.

Genauso wichtig aber ist der erhöhte Massedruck, dem die Schmelze beim Eintritt in den Formgebungsbereich unterliegt, da durch diesen erhöhten Massedruck der Umfang des erzeugten Schmelzebruchs in der Oberfläche des Schmelzestroms direkt beeinflußt wird. Hier hat sich als erfindungswesentlich herausgestellt, daß die Schmelze den parallelen Bügelbereich in maximal 0,07 Sekunden durchlaufen soll, wenn der Massedruck des Schmelzestroms beim Eintritt in den Formgebungsbereich auf 450 bis 550 bar erhöht worden ist. Unter diesen Voraussetzungen wird die gewünschte Mikrorauhigkeit durch ein optimales Verhältnis zwischen dem erzeugten Schmelzebruch und der unvollständigen Glättung durch die nachfolgende Bügelzone erreicht.

Die Erfindung wird in den nachfolgenden Beispielen näher beschrieben:

### Beispiel 1:

Extrudiert wird eine transparente Leiste mit einer Wanddicke von 0,5 mm und einer Extrusionsgeschwindigkeit von 9 m/min. Der Parallelteil des Düsenmundstücks ist 6 mm lang. Die Verweilzeit der Schmelze in diesem Parallelteil beträgt ca. 0,04 Sekunden. Am Einlauf des Formgebungsbereichs wird ein Massedruck von 520 bar gemessen. Die Oberfläche der extrudierten Leiste wies eine Rauhtiefe in Längs- und Querrichtung auf, die annähernd gleich war.

### Beispiel 2:

Extrudiert wird eine Leiste mit einer Wanddicke von 0,65 mm. Bedingt durch die höhere Wanddicke des Profils beträgt die Extrusionsgeschwindigkeit 7,5 m/min.

Die parallele Bügelzone am Ausgang des Formgebungsbereichs ist 5 mm lang. Die Verweilzeit der Schmelze in der parallelen Bügelzone beträgt ca. 0,04 Sekunden. Am Eingang des Formgebungsbereichs wird ein Massedruck von ca. 450 bar gemessen. Auch in diesem Fall wird eine optimale Oberfläche der Leiste durch annähernd gleiche Rauhtiefe in Längs- und Querrichtung erzielt.

### Beispiel 3:

Extrudiert wird eine Leiste von 0,8 mm Wanddicke. Bedingt durch diese Profildicke wird eine Extrusionsgeschwindigkeit von 4,8 m/min erreicht. Die Bügelzone am Ausgang des Formgebungsbereichs ist mit 4,5 mm Lange ausgelegt. Dies ergibt eine Verweildauer der Schmelze im Bereich der Bügelzone von ca. 0,056 Sekunden. Am Eingang des Formgebungsbereiches wird ein Massedruck von über 450 bar gemessen. Die optimale Scannerlesbarkeit der Profiloberfläche wurde auch in diesem Fall festgestellt.

Die Beispiele zeigen deutlich, daß mit erhöhtem Massedruck am Eingang des Formgebungsbereiches und kurzer parallel verlaufender Bügelzone an dessen Ausgang eine entsprechend gestellte Rezeptur unter Beachtung des erfindungsgemäß angegebenen Temperaturverlaufs im Urformprozess Profiloberflächen erzeugt werden können, die in optimaler Weise für das Scannerlesen geeignet sind.

## Patentansprüche

1. Verfahren zur kontinuierlichen Herstellung von Profilen aus glasklarem Polyvinylchlorid, wobei die Ausgangsmaterialien der Rezeptur gemischt, durch Wärmezuführung und Friktion in einem Extruder zu einer homogenen Schmelze aufgeschlossen und anschließend der Schmelzestrom in Form gebracht wird, dadurch gekennzeichnet, daß der Schmelzestrom beim Eintritt in den Formgebungsbereich einem erhöhten Massedruck bis 550 bar ausgesetzt wird, daß dabei im Bereich der Strömungsoberfläche in bekannter Weise Schmelzebruch erzeugt wird, und daß daran anschließend der Schmelzebruch im Durchlaufen einer maximal 10 mm langen achsparallelen Bügelzone am Ende des Formgebungsbereiches auf eine annähernd gleiche Rauhtiefe in Längs- und Querrichtung gebracht wird.

2. Verfahren nach Anspruch 1, dadurch gekennzeichnet, daß die Differenz der Rauhtiefe in Längs- und Querrichtung kleiner als 3,0 µm ist.

3. Verfahren nach Anspruch 1, dadurch gekennzeichnet, daß die Durchlaufzeit des Schmelzestroms durch die Bügelzone maximal 0,07 Sekunden beträgt.

4. Verfahren nach Anspruch 1, dadurch gekennzeichnet, daß der erhöhte Massedruck zwischen 450 und 550 bar liegt.

5. Verfahren nach Anspruch 1, dadurch gekennzeichnet, daß die Temperatur des Schmelzestroms im Formgebungsbereich maximal 200° C beträgt.

6. Verfahren nach Ansprüchen 1 und 4, dadurch gekennzeichnet, daß die Temperatur des Formgebungsbereichs maximal der Temperatur des Schmelzestroms entspricht.

## Claims

1. Process for the continuous production of profiles from transparent polyvinyl chloride, whereby the initial materials constituting the formulation are mixed, fused to form a homogeneous melt in an extruder by the application of heat and friction, and subsequently introduced in molten form into a mould, thereby characterized, in that the molten flow is subjected to an increased pressure of up to 550 bar on entering the moulding section; in that a breakdown of the melt is produced in a known way on the surface of the molten flow; and in that the melt thus affected is brought to approximately the same peak-to-valley height in both the longitudinal and transverse directions on passing through an axially parallel smoothing section, of 10 mm maximum in length, at the end of the moulding section.

2. Process according to claim 1, thereby characterized, in that the difference in peak-to-valley height in the longitudinal and transverse directions is less than 3.0 um.

3. Process according to claim 1, thereby characterized, in that the passage time for the molten flow through the smoothing section is 0.07 seconds maximum.

4. Process according to claim 1, thereby characterized, in that the increased pressure is between 450 and 550 bar.

5. Process according to claim 1, thereby characterized, in that the temperature of the molten flow in the moulding section is 200 oC maximum.

6. Process according to claims 1 and 4, thereby characterized, in that the maximum temperature in the moulding section corresponds to the temperature of the molten flow.

## Revendications

1. Procédé de fabrication continue de profilés en chlorure de polyvinyle clair, dans lequel les matières de base de la formulation sont mélangées, transformées dans une extrudeuse en une masse fondue homogène par apport de chaleur et friction, le flux de masse fondue étant ensuite mis en forme, caractérisé par le fait que le flux de masse fondue est soumis à une pression de masse jusqu'à 550 bars à l'entrée dans la zone de formage, qu'une rupture de la masse fondue est ainsi créée, de manière connue, dans la zone superficielle de l'écoulement et que pendant la traversée d'une zone de lissage parallèle à l'axe, d'une longueur maximale de 10 mm, une rugosité sensiblement égale est conférée à la rupture de la masse fondue dans les sens longitudinal et transversal.

2. Procédé selon la revendication 1, caractérisé par le fait que la différence de rugosité dans les sens longitudinal et transversal est inférieure à 3,0 µm.

3. Procédé selon la revendication 1, caractérisé par le fait que le temps de passage du flux de masse fondue par la zone de lissage est au maximum de 0,07 secondes.

4. Procédé selon la revendication 1, caractérisé par le fait que la pression de masse plus élevée se situe entre 450 et 550 bars.

5. Procédé selon la revendication 1, caractérisé par le fait que la température du flux de masse fondue atteint au maximum 200° C dans la zone de formage.

6. Procédé selon les revendications 1 et 4, caractérisé par le fait que la température de la zone de formage atteint au maximum la température du flux de la masse fondue.
